# EUROPÄISCHE PATENTANMELDUNG

(11) **EP 1 524 419 A1**
(43) Veröffentlichungstag der Anmeldung: **20.04.2005**
(21) Anmeldenummer: 04024238.0
(22) Anmeldetag: 12.10.2004
(51) Int. Cl.: F02B 27/02

(54) **Luftansaugkanalsystem**

(30) Priorität: 14.10.2003 DE 10347574
(71) Anmelder: Pierburg GmbH, 41460 Neuss (DE)
(72) Erfinder: Brunetti, Constantino, 57730 Frödenberg (DE); Hüsges, Hans-Jürgen, 47877 Willich (DE)
(74) Vertreter: von Kreisler Selting Werner

(57) **Zusammenfassung**

Ein Luftansaugkanalsystem für Brennkraftmaschinen weist mehrere Luftansaugkanäle (12) auf. Die Luftansaugkanäle (12) sind durch mehrere Gehäuseteile (10) gebildet. Je Luftansaugkanal (12) ist jeweils eine Klappe vorgesehen, wobei es sich bei der Klappe um eine Drossel- , Drall-, Tambeloder Schaltklappe handeln kann. Die Klappen sind von einem Lagerelement (16) getragen. Zur Fixierung des Lagerelements (16) in dem Gehäuse (10) weist das Lagerelement ein erstes Rastelement (22) auf, das in ein zweites am Gehäuseteil (10) vorgesehenes Rastelement (32) eingreift.

## Beschreibung

Die Erfindung betrifft ein Luftansaugkanalsystem für Kraftfahrzeug-Brennkraftmaschinen. Insbesondere ist das Luftansaugkanalsystem für V-Motoren geeignet.

Es ist bekannt in Luftansaugkanälen von Brennkraftmaschinen zur Beeinflussung des Strömungsverhaltens der angesaugten Luft Drossel-, Drallund/oder Tumbelklappen vorzusehen. Durch derartige Klappen kann die Luftmenge sowie die Verwirbelung der Luftströmung gesteuert werden. Insbesondere bei V-Motoren ist der vorhandene Bauraum in dem Bereich des Luftansaugkanalsystems, in dem derartige Klappen angeordnet werden, sehr gering. Auf Grund des geringen vorhandenen Platzes werden die Klappen beispielsweise an einer Seitenwand des Kanals gelagert. Dies hat jedoch den Nachteil, dass bei einer beispielsweise teilweise geöffneten Drosselklappe der Kanal nur an einer Seite des Kanals einen Schlitz aufweist. Dies ist für das Strömungsverhalten nachteilig. Dem gegenüber sind mittig in dem Luftansaugkanal gelagerte Drosselklappen vorteilhaft, da hierdurch eine im Wesentlichen symmetrische Strömung erzeugt werden kann. Die mittige Lagerung der Drosselklappen ist jedoch häufig aus Platzgründen nicht möglich.

Ferner ist das Vorsehen von Schaltklappen in Luftansaugkanalsystemen bekannt. Schaltklappen dienen zur Variation der Länge von Ansaugkanälen. Ein aus DE 196 14 474 bekanntes Luftansaugkanalsystem weist für jeden Zylinder einen spiralförmig verlaufenden Luftansaugkanal auf. Hierbei erfolgt das Ansaugen der Luft über einen zentralen, innerhalb der spiralförmigen Ansaugkanäle angeordneten Sammel-Einlasskanal. Durch den für sämtliche Luftansaugkanäle gemeinsam vorgesehenen Sammel-Einlasskanal wird Luft angesaugt und über die einzelnen Luftansaugkanäle zur Brennkraftmaschine geleitet. Zum Verändern der Länge des Luftansaugkanals ist ein Kurzschlusskanal vorgesehen. Dieser mit einer Schaltklappe öffen- und verschließbare Kurzschlusskanal ist mit dem Sammel-Einlasskanal und jeweils einem Luftansaugkanal verbunden. Die einzelnen Schaltklappen sind über eine gemeinsame Welle miteinander verbunden. Die Lagerung der Welle erfolgt in dem Gehäuse des Luftansaugkanalsystems. Hierzu weist das Luftansaugkanalsystem zwei Gehäusehälften auf, wobei die Schaltwelle zwischen die Gehäusehälften eingelegt wird.

Die Klappenwellen, mit denen die einzelnen Schaltklappen gehalten und schwenkbar gelagert sind, werden in den Gehäusen über Befestigungselemente wie Schrauben und/oder Sicherungsringe gehalten. Hierbei besteht die Gefahr, dass sich durch die Motorvibrationen Befestigungselemente lösen und dann in den Zylinderraum gelangen. Dies kann zur vollständigen Zerstörung des Motors führen.

Aufgabe der Erfindung ist es, ein Luftansaugkanalsystem für Brennkraftmaschinen zu schaffen, bei dem die Gefahr eines Lösens von Befestigungselementen verringert, vorzugsweise ausgeschlossen ist.

Die Lösung der Aufgabe erfolgt erfindungsgemäß durch die Merkmale des Anspruchs 1.

Ein Luftansaugkanalsystem weist mehrere Luftansaugkanäle auf, die durch mehrere, insbesondere zwei Gehäuseteile gebildet sind. Die Luftansaugkanäle sind mit einzelnen Brennräumen der Brennkraftmaschine, bei der es sich insbesondere um einen Reihen- oder V-Motor handelt, verbunden. Zur Veränderung des Strömungsverhaltens und/oder der Luftansaugkanallänge weist jeder Luftansaugkanal eine Klappe auf. Bei den Klappen kann es sich beispielsweise um Drossel-, Drall-, Tambel- und/oder Schaltklappen handeln. Vorzugsweise sind die Klappen jeweils innerhalb eines Luftansaugkanals angeordnet, so dass sich die Klappenwelle in dem Luftansaugkanal befindet und die Klappe mittig im Kanal gelagert ist. Erfindungsgemäß ist ein Lagerelement vorgesehen, das mindestens eine Klappe trägt. Das Lagerelement weist ein erstes Rastelement auf, das mit einem zweiten an dem Gehäuseteil vorgesehenen Rastelement zur Befestigung des Lagerelements in dem Gehäuseteil zusammenwirkt. Das Lagerelement trägt die Klappe, d.h. die mit der Klappe verbundene Klappenwelle. Die Klappenwelle ist in dem Lagerelement derart angeordnet, dass die Klappe durch das Lagerelement getragen ist. Das Vorsehen von Sicherungselementen innerhalb der Luftansaugkanäle zur Sicherung der Klappenwelle ist daher nicht erforderlich. Gegebenenfalls kann außerhalb des Luftansaugkanals, insbesondere auf einer Außenseite des Lagerelements ein Sicherungsring, oder ähnliches vorgesehen sein.

Besonders bevorzugt ist es, dass das Rastelement kanalbildend ausgebildet ist. Dies hat den Vorteil, dass die Gestaltung der Gehäuseteile vereinfacht ist und in dem Gehäuseteil keine schmalen Schlitze oder Öffnungen zum Einstecken des ersten Haftelements vorgesehen werden müssen. Eine in Richtung des Ansaugkanals weisende Oberfläche des ersten Rastelements bildet somit die Kanalinnenwand. Vorzugsweise ist das erste Rastelement derart ausgebildet, dass keine Kanten oder Absätze an der Innenseite des Kanals auftreten, die zu unerwünschten Verwirbelungen führen könnten.

Vorzugsweise trägt ein einzelnes Lagerelement mehrere Klappen. Beispielsweise sind bei einem V-Motor zwei Reihen an Zylindern und somit auch zwei Reihen an Klappen vorgesehen, die jeweils über ein gemeinsames Lagerelement gelagert sind. Vorzugsweise weisen die Klappen für jeweils eine Reihe des V-Motors eine gemeinsame Welle auf.

Besonders bevorzugt ist es, die zwei Klappenwellen durch ein einziges gemeinsames Lagerelement zu tragen. Diese hat insbesondere in der Montage erhebliche Vorteile, da die Montage vereinfacht ist und schneller ausgeführt werden kann.

Die Klappe und die Klappenwelle bzw. die Klappen und die gemeinsame Klappwelle sind vorzugsweise einstückig ausgebildet. Dies hat den Vorteil, dass keine Befestigungselemente zur Befestigung der Klappe bzw. der Klappen auf der Klappenwelle erforderlich sind.

Nachfolgend wird die Erfindung anhand einer bevorzugten Ausführungsform unter Bezugnahme auf die anliegenden Zeichnungen näher erläutert.

### Es zeigen:

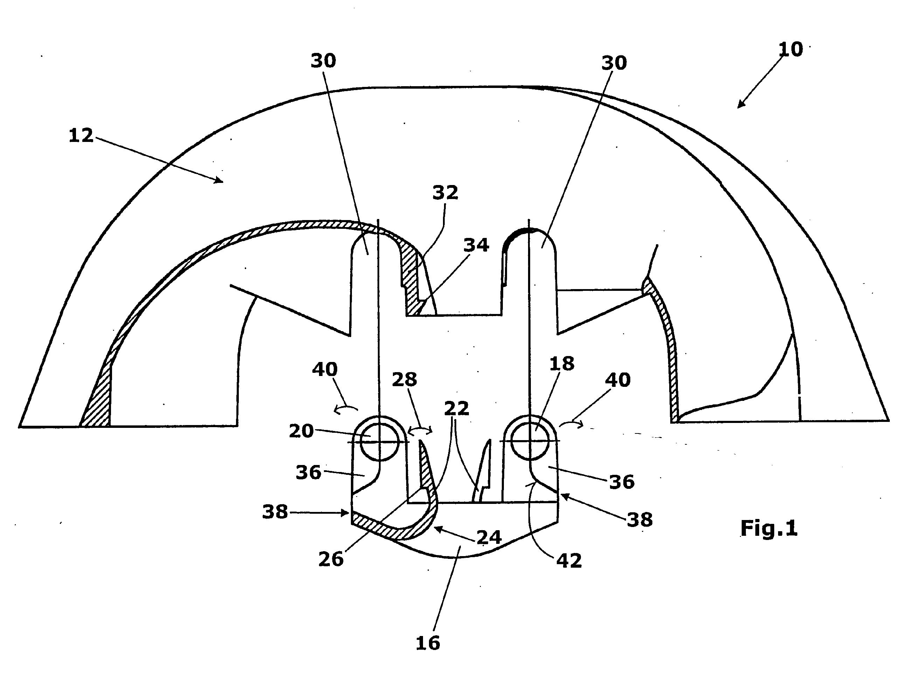

- Fig. 1: eine schematische teilweise geschnittene Seitenansicht eines Gehäuseteils und des Lagerelements vor der Montage,
- Fig. 2: eine schematische teilweise geschnittene Seitenansicht des Gehäuseteils und des Lagerelements in eingebautem Zustand, und
- Fig. 3: eine schematische perspektivische Ansicht des Gehäuseteils mit montiertem Lagerelement.

Ein Luftansaugkanalsystem weist ein Gehäuseteil 10 auf, in den mehrere Luftansaugkanäle 12 ausgebildet sind. Beim Verbinden des Gehäuseteils 10 mit einem zweiten Gehäuseteil werden die Ansaugkanäle 12 zu in sich in Umfangsrichtung geschlossenen Luftansaugkanälen ausgebildet. Innerhalb der Luftansaugkanäle sind Öffnungen 14 ausgebildet, die durch nicht dargestellte Klappen verschlossen werden können. Bei den Klappen handelt es sich im dargestellten Ausführungsbeispiel um Schaltklappen, durch die die Länge der Luftansaugkanäle 12 variiert werden kann.

Die Klappen sind in einem gemeinsamen Lagerelement 16 gelagert, wobei das Lagerelement 16 im dargestellten Ausführungsbeispiel zur Lagerung sämtlicher Klappen eines Ansaugkanalsystems für einen V-Motor dient. Hierzu weist das Lagerelement Öffnungen 18, 20 auf, wobei die Öffnungen oder Lagerstellen 18 und die Öffnungen bzw. Lagerstellen 20 jeweils hintereinander angeordnet sind und zur Lagerung jeweils einer Klappenwelle dienen. Die in den Öffnungen 14 angeordneten Klappen werden abwechselnd von der einen und der anderen Klappenwelle getragen. Durch drehen der jeweiligen Klappenwelle werden somit sämtliche Klappenstellungen derjenigen Kanäle verändert, die zu den auf einer Seite des V-Motors in Reihe angeordneten Zylindern führen. Durch die in den Lagerstellen 20 gelagerte Klappenwelle werden die in den zu der anderen Reihe des V-Motors führenden Luftansaugkanälen gelagerten Klappen getragen und gemeinsam verschwenkt. Die beiden Klappenwellen können miteinander verbunden sein um ein gemeinsames, gleichmäßiges Öffnen und Schließen der Klappen zu ermöglichen.

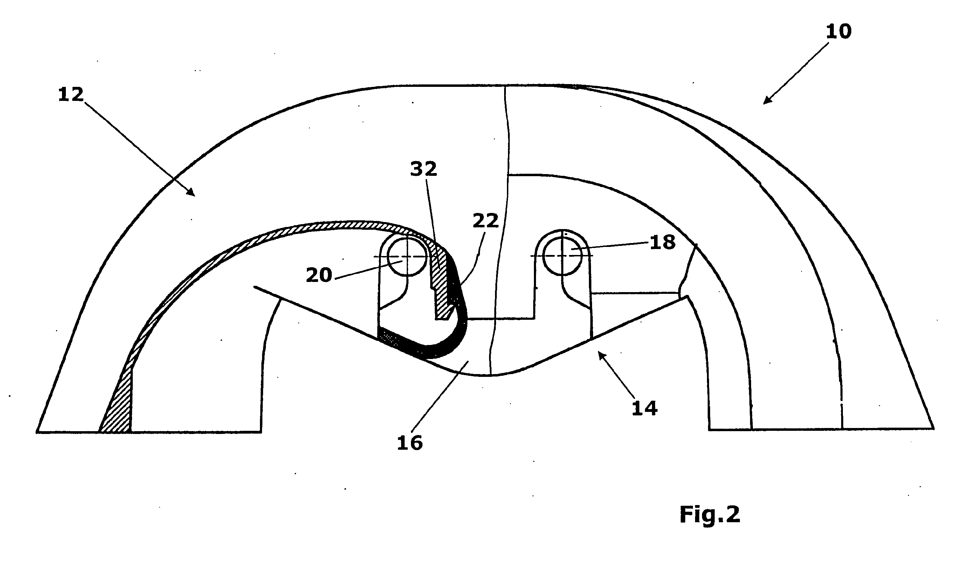

Erfindungsgemäß weist das Lagerelement 16 mehrere erste Rastelemente 22 auf. Die Rastelemente 22 sind bogenförmig ausgebildet und weisen einen in Richtung des Luftansaugkanals weisenden konvexen Bereich 24 auf. An diesen schließt sich ein einen Rasthacken 26 aufweisendes Teil an. Durch die konvexe kanalbildende Ausgestaltung des ersten Rastelements 22 ist der Rasthacken in einem gewissen Bereich elastisch verformbar, wie durch den Pfeil 28 angedeutet. Nach der Montage der Klappenwellen und der Klappen in den Öffnungen 18, 20 des Lagerelements 16 wird das Lagerelement in die in Figur 2 dargestellte Lage gebracht, d.h. in schlitzförmige Ausnehmungen 30 des Gehäuseteils 10 eingeschoben. In diesem Bereich weist das Gehäuseteil 10 ein zweites Rastelement 32 mit einer Rastnase 34 auf. Im montierten Zustand greift die Rastnase 26 hinter die Rastnase 34, wie in Figur 2 dargestellt. Hierdurch ist die Lage des Lagerelements und somit auch die der Klappen, die durch die Klappenwellen von dem Lagerelement 16 getragen werden, definiert.

Zur Montage der Lagerwellen in den Öffnungen bzw. Lageraufnahmen 18, 20 ist ein Lagerteil 36 des Lagerelements 16 mit diesem über ein Filmgelenk 38 verbunden, so dass das Lagerteil 36 zum Einlegen der Klappenwelle in Richtung eines Pfeils 40 aufgeklappt werden kann. Anstatt des Vorsehens eines Filmgelenks 38 kann es sich bei dem Lagerteil auch um ein gesondertes Teil handeln, dass beispielsweise an einer Anlagefläche 42 mit dem Lagerelement 18 verklebt wird. Ebenso ist es möglich, die Lagerung der Klappenwelle in den Öffnungen 28 durch Montagespritzen zu verwirklichen.

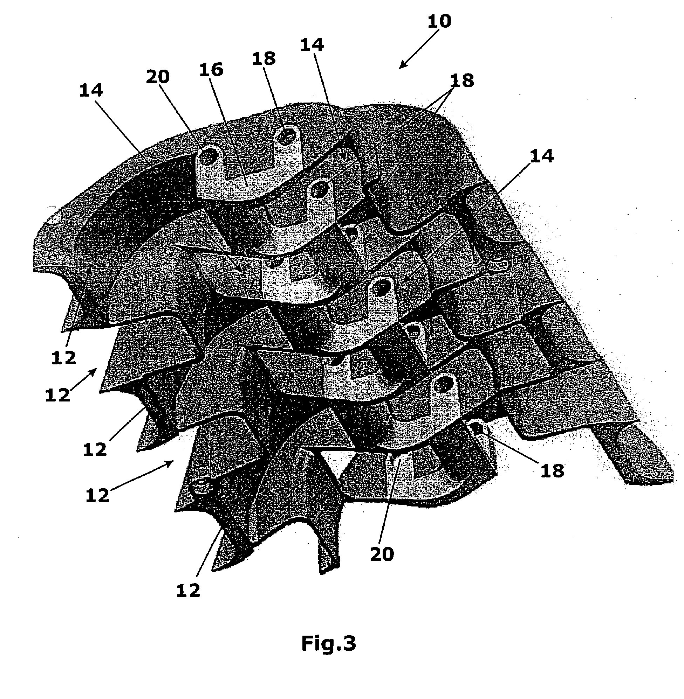

Die kanalbildenden ersten Rastelemente 22 erstrecken sich vorzugsweise über die gesamte Kanalbreite (Fig. 3), wobei je Luftansaugkanal 12 nur ein Rastelement 22 vorgesehen ist. Die sichere Fixierung des Lagerelements 16 in dem Gehäuseteil 10 ist beispielsweise dadurch gewährleistet, dass die Rastelemente 22 benachbarter Luftansaugkanäle 12 auf einander zu ausgerichtet sind. Die kanalbildende Oberfläche des Rastelements 22 weist bei benachbarten Rastelementen 22 somit in entgegengesetzte Richtung. Ferner sind die Öffnungen 18, 20 zur Lagerung der Klappenwellen in Ansätzen vorgesehen, die entsprechend in die Ausnehmungen 30 des Gehäuseteils 10 eingreifen und hierin geführt sind. Hierdurch ist die Lage des Lagerelements 16 in dem Gehäuseteil 10 zusätzlich definiert. Da es sich bei dem ersten Rastelement 22 vorzugsweise um ein kanalbildendes Rastelement handelt, ist das zweite Rastelement 32 vorzugsweise vollständig von dem ersten Rastelement 22 überdeckt (Fig. 2).

Da das Lagerelement 16 bei der bevorzugten Ausführungsform zur Lagerung sämtlicher Klappen dient und es sich bei der dargestellten Ausführungsform um ein Luftansaugkanalsystem für V-Motoren handelt, ist das Lagerelement 16 vorzugsweise zickzackförmig ausgebildet, wobei das Lagerelement entsprechend aneinandergereihten U's aufgebaut ist, deren offene Seite abwechselnd in entgegengesetzte Richtungen weist.

## Patentansprüche

1. Luftansaugkanalsystem für Brennkraftmaschinen, mit
mehreren Luftansaugkanälen (12) bildenden Gehäuseteilen (10),
jeweils eine je Luftansaugkanal (12) vorgesehenen Klappe und
einem mindestens eine Klappe tragenden Lagerelement (16),
wobei das Lagerelement (16) ein erstes Rastelement (22) aufweist, das mit einem zweiten an dem Gehäuseteil (10) vorgesehenen Rastelement (32) zur Befestigung des Lagerelements (16) zusammenwirkt.

2. Luftansaugkanalsystem nach Anspruch 1, **dadurch gekennzeichnet, dass** das erste Rastelement (22) kanalbildend ausgestaltet ist.

3. Luftansaugkanalsystem nach Anspruch 1 oder 2, **dadurch gekennzeichnet, dass** das erste Rastelement (22) sich über die gesamte Breite des Luftansaugkanals (12) erstreckt.

4. Luftansaugkanalsystem nach einem der Ansprüche 1 bis 3, **dadurch gekennzeichnet, dass** das erste Rastelement (22) in Richtung des Luftansaugkanals (12) konvex ausgebildet ist.

5. Luftansaugkanalsystem nach einem der Ansprüche 1 bis 4, **dadurch gekennzeichnet, dass** das erste Rastelement (22) das zweite Rastelement (32) überdeckt.

6. Luftansaugkanalsystem nach einem der Ansprüche 1 bis 5, **dadurch gekennzeichnet, dass** das Lagerelement (16) mehrere, insbesondere alle Klappen trägt.

7. Luftansaugkanalsystem nach einem der Ansprüche 1 bis 6, **dadurch gekennzeichnet, dass** das Lagerelement (16) zwei Klappenwellen trägt.

8. Luftansaugkanalsystem nach Anspruch 6 oder 7, **dadurch gekennzeichnet, dass** das Lagerelement zickzackförmig ausgebildet ist.

9. Luftansaugkanalsystem nach einem der Ansprüche 1 bis 8, **dadurch gekennzeichnet, dass** benachbarte erste Rastelemente (22) aufeinander zu ausgerichtet sind.

10. Luftansaugkanalsystem nach einem der Ansprüche 1 bis 9, **dadurch gekennzeichnet, dass** das Lagerelement (16) einstückig ausgebildet ist.
